# EUROPEAN PATENT APPLICATION

(11) **EP 1 843 615 A1**
(43) Date of publication of application: **10.10.2007**
(21) Application number: 06290574.0
(22) Date of filing: 04.04.2006
(51) Int. Cl.: H04Q 7/38, G08B 25/01

(54) **System for contacting a destination device via intermediate devices in response to information from a source device**

(71) Applicant: Alcatel Lucent, 75008 Paris (FR)
(72) Inventor: Van der Meerssche, Bart Frank Juliaan, 1730 Asse (BE); Godon, Marc Bruno Frieda, 1840 Londerzeel (BE); Trappeniers, Lieven Leopold Albertine, 2200 Herentals (BE); Brackx, Michaël, 9000 Gent (BE)
(74) Representative: Narmon, Gisèle Marie Thérèse

(57) **Abstract**

In systems (1) for contacting destination devices (7-9) via first and second intermediate devices (3-6) in response to information from source devices (2), the source devices (2) comprise memories (21) for storing the information and wireless transmitters (22) for transmitting the information, which information comprises address codes and subscriber codes. The first intermediate devices (3-5) comprise wireless receivers (31) for receiving the address codes and the subscriber codes and first network interfaces (35) for in response to the address codes contacting and supplying the subscriber codes to second network interfaces (61). The second intermediate devices (6) comprise the second network interfaces (61) for receiving the subscriber codes and third network interfaces (65) for in response to the subscriber codes contacting fourth network interfaces of the destination devices (7-9). Such systems (1) are up-to-date and relatively automatic and have many purposes.

## Description

The invention relates to a system for contacting a destination device via first and second intermediate devices in response to information from a source device.

Examples of such a source device are cards comprising memories and other objects comprising memories. Examples of such a first intermediate device are telephone devices and other communication devices. Examples of such a second intermediate device are telephone exchanges and other communication exchanges. Examples of such a destination device are telephone devices and other communication devices.

A prior art system is known from USApp 20040264661, which discloses an emergency alert notification system. A witness contacts a service provider using a phone number and a subscriber ID number that has been displayed by a subscriber at a strategic location. With the subscriber's ID number, the service provider provides notification.

The known system is disadvantageous, inter alia, owing to the fact that it is relatively old-fashioned.

It is an object of the invention, inter alia, to provide a system as defined above that is relatively up-to-date.

The system according to the invention is characterized in that the system comprises
- the source device comprising a memory for storing the information and comprising a wireless transmitter for transmitting the information, which information comprises an address code and a subscriber code,
- the first intermediate device comprising a wireless receiver for receiving the address code and the subscriber code and comprising a first network interface for in response to the address code contacting a second network interface and supplying the subscriber code to the second network interface, and
- the second intermediate device comprising the second network interface for receiving the subscriber code and comprising a third network interface for in response to the subscriber code contacting a fourth network interface of the destination device.

By providing the source device with the memory for storing the information and with the wireless transmitter for transmitting the information, which information comprises the address code and the subscriber code, the address code and the subscriber code are supplied to the first intermediate device that comprises the wireless receiver for receiving the address code and the subscriber code. By providing the first intermediate device with the first network interface for in response to the address code contacting the second network interface, the subscriber code is supplied to the second intermediate device, which second intermediate comprises the second network interface for receiving the subscriber code. By providing the second intermediate device with the third network interface for in response to the subscriber code contacting the fourth network interface, the destination device that comprises the fourth network interface is contacted. As a result, a relatively up-to-date system has been created for replacing the relatively old-fashioned prior art system.

The system according to the invention is further advantageous, inter alia, in that it is a relatively automatic system, where the prior art system is a relatively non-automatic system, and it that it can be used for relatively many purposes, where the prior art system can only be used for relatively few purposes.

It should be noted that USApp 20050202801 discloses an emergency call method. This prior art does not disclose the different intermediate devices and the use of the subscriber code for, at the third network interface, contacting the fourth network interface.

An embodiment of the system according to the invention is characterized in that the first intermediate device comprises a first generator for generating a device code that together with the subscriber code is to be supplied to the second network interface and in that the system comprises a further first intermediate device comprising a further wireless receiver and a further first network interface and a further first generator for generating a further device code different from the device code and in that the second intermediate device comprises a second generator for in response to the device code generating location information that is to be supplied via the third network interface to the fourth network interface.

The several first intermediate devices allow the source device to supply the address code and the subscriber code at one of several locations each defined by a different device code. The first generator of the first intermediate device that has received the address code and the subscriber code generates the device code for this particular first intermediate device. The second generator of the second intermediate device converts this device code into the location information destined for the destination device. As a result, at the destination device the location of the first intermediate device that has received the address code and the subscriber code is known. This is a great additional advantage.

An embodiment of the system according to the invention is characterized in that the source device is a battery-less device comprising a power receiver for receiving power for feeding the wireless transmitter and in that the first intermediate device comprises a power transmitter for transmitting the power.

The battery-less source device is a low cost device owing to the fact that it does not require a battery and it does not require its battery to be replaced, which are great additional advantages.

An embodiment of the system according to the invention is characterized in that the second intermediate device comprises a fifth network interface for in response to the subscriber code contacting a sixth network interface of a further destination device.

The second intermediate device may comprise a translator for translating the subscriber code into one or more address codes that define that the fourth network interface and the sixth network interface are to be contacted. According to a first option, the subscriber code comprises a first part that is translated into an address code defining the fourth network interface and comprises a second part that is translated into an address code defining the sixth network interface. According to a second option, the subscriber code comprises only one part that is translated into an address code defining the fourth network interface and into an address code defining the sixth network interface. The fact that more than one destination device is contacted is a great additional advantage.

An embodiment of the system according to the invention is characterized in that the first and second network interfaces are telephone interfaces and in that the third network interface is a non-telephone interface.

With the first and second network interfaces being telephone interfaces, the address code defining the second network interface may comprise a telephone number and the first intermediate device may comprise a telephone device. With the third and fourth network interfaces being non-telephone interfaces, such as computer interfaces and modems, the address code defining the fourth network interface may comprise an email address and the destination device may comprise a personal computer for receiving for example an email message from the second intermediate device. It is not to be excluded that the address code defining the fourth network interface may comprise another kind of address and that the destination device may receive another kind of message.

An embodiment of the system according to the invention is characterized in that the first and second and third network interfaces are telephone interfaces.

With the first and second and third and fourth network interfaces being telephone interfaces, the address code defining the second network interface may comprise a telephone number and the first intermediate device may comprise a telephone device and the address code defining the fourth network interface may comprise a further telephone number and the destination device may comprise a further telephone device for receiving for example a SMS message from the second intermediate device. It is not to be excluded that the destination device may receive another kind of message.

An embodiment of the system according to the invention is characterized in that a call is set up between the first network interface and the fourth network interface.

The call between the first intermediate device and the destination device allows information to flow interactively in two directions, which is a great additional advantage.

An embodiment of the system according to the invention is characterized in that the system comprises a subscription unit for charging a subscriber per subscriber code for paying the costs made by one or more of the network interfaces.

Thereto, the subscriber may pay a fixed fee and/or a variable fee that for example depends on a number of contacts etc. The provision of a new service is a great additional advantage.

The invention also relates to a source device comprising a memory for storing an address code and a subscriber code and comprising a wireless transmitter for transmitting the address code and the subscriber code for use in a system according to the invention.

The invention also relates to a first intermediate device comprising a wireless receiver for receiving an address code and a subscriber code and comprising a first network interface for in response to the address code contacting a second network interface and supplying the subscriber identification code to the second network interface for use in a system according to the invention.

The invention also relates to a second intermediate device comprising a second network interface for receiving a subscriber code and comprising a third network interface for in response to the subscriber identification code contacting a fourth network interface for use in a system according to the invention.

The invention also relates to a method for contacting a destination device via first and second intermediate devices in response to information from a source device.

The method according to the invention is characterized in that the method comprises the steps of
- at the source device comprising a memory for storing the information and comprising a wireless transmitter, transmitting the information, which information comprises an address code and a subscriber code,
- at the first intermediate device comprising a wireless receiver and a first network interface, receiving the address code and the subscriber code and in response to the address code contacting a second network interface and supplying the subscriber code to the second network interface, and
- at the second intermediate device comprising the second network interface and a third network interface, receiving the subscriber code and in response to the subscriber identification code contacting a fourth network interface of the destination device.

The invention also relates to a computer program product for performing the steps of the method according to the invention, and to a medium comprising the computer program product. The method may comprise, in addition, further steps, and the computer program product may perform, in addition, these further steps etc.

Embodiments of the source device according to the invention and of the first intermediate device according to the invention and of the second intermediate device according to the invention and of the method according to the invention and of the computer program product according to the invention and of the medium according to the invention correspond with the embodiments of the system according to the invention. The source device and the first and second intermediate devices are devices that can be produced and/or sold individually.

The invention is based upon an insight, inter alia, that the known system is a relatively old-fashioned system, and is based upon a basic idea, inter alia, that a source device should supply an address code and a subscriber code to a first intermediate device, which first intermediate device should contact a second intermediate device in response to the address code and should supply the subscriber code to this second intermediate device, which second intermediate device should contact a destination device in response to the subscriber code.

The invention solves the problem, inter alia, to provide a system as defined above that is relatively up-to-date. The system according to the invention is further advantageous, inter alia, in that it is a relatively automatic system, and it that it can be used for relatively many purposes.

These and other aspects of the invention will be apparent from and elucidated with reference to the embodiments(s) described hereinafter.
Fig. 1 shows diagrammatically a system according to the invention comprising a source device according to the invention and first and second intermediate devices according to the invention,
Fig. 2 shows diagrammatically a source device according to the invention in greater detail,
Fig. 3 shows diagrammatically a first intermediate device according to the invention in greater detail, and
Fig. 4 shows diagrammatically a second intermediate device according to the invention in greater detail.

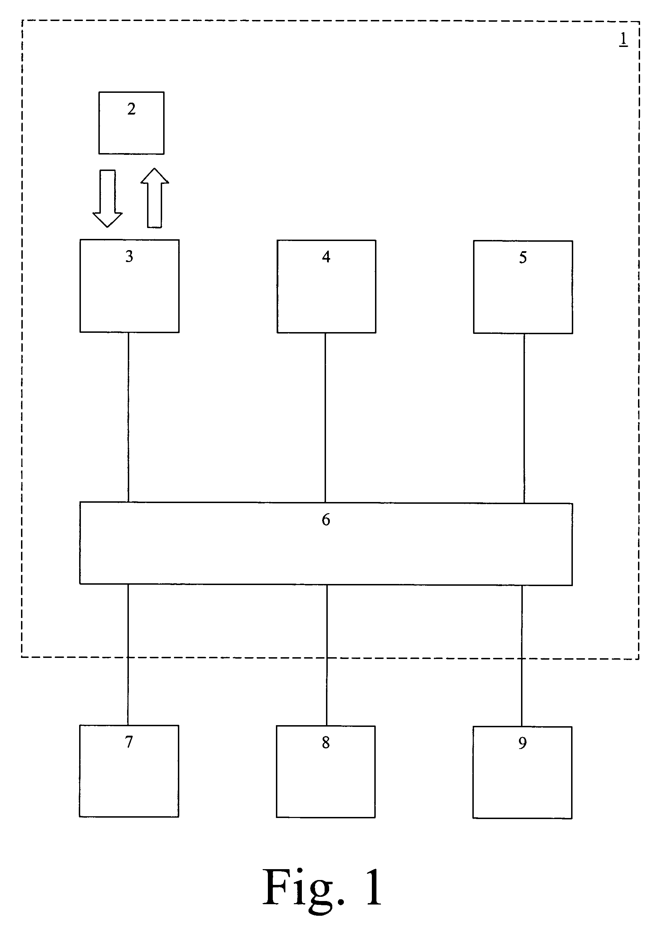

The system 1 according to the invention shown in Fig. 1 comprises a source device 2 according to the invention and comprises first intermediate devices 3-5 according to the invention and a second intermediate device 6 according to the invention. The source device 2 is wirelessly coupled to the first intermediate device 3, for example owing to the fact that the source device 2 is located relatively close to the first intermediate device 3 and is located relatively far away from the first intermediate devices 4 and 5, or owing to the fact that the source device 2 is within reach of the first intermediate device 3 and is not within reach of the first intermediate devices 4 and 5 etc. The first intermediate devices 3-5 are wiredly coupled to the second intermediate device 6, alternatively the first intermediate devices 3-5 might be wirelessly coupled to the second intermediate device 6 or each first intermediate device 3-5 might individually be wiredly or wirelessly coupled to the second intermediate device 6 etc. The second intermediate device 6 is wiredly coupled to the destination devices 7-9, alternatively the second intermediate device 6 might be wirelessly coupled to the destination devices 7-9 or each destination device 7-9 might individually be wiredly or wirelessly coupled to the second intermediate device 6 etc.

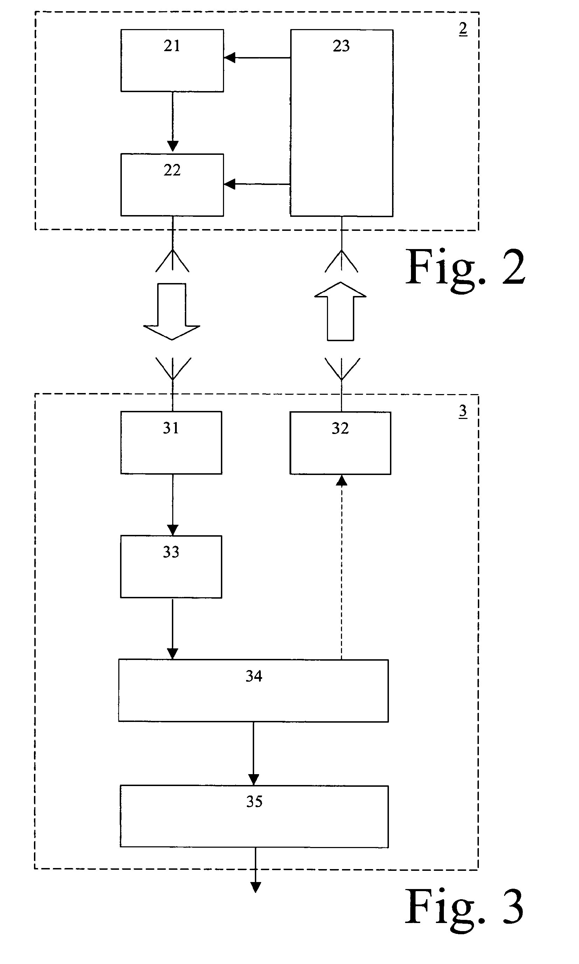

The source device 2 according to the invention shown in Fig. 2 in greater detail comprises a memory 21 for storing information and comprises a wireless transmitter 22 for transmitting the information to the first intermediate device 3, which information comprises an address code and a subscriber code. The source device 2 may further comprise a battery for feeding the memory 21 and the wireless transmitter 22. Alternatively, the source device 2 may be a battery-less device comprising a power receiver 23 for receiving power from the first intermediate device 3 for feeding the wireless transmitter 22 and for possibly feeding the memory 21.

The first intermediate device 3 according to the invention shown in Fig. 3 in greater detail comprises a wireless receiver 31 for receiving the address code and the subscriber code and comprises a first network interface 35 for in response to the address code contacting a second network interface 61 of the second intermediate device 6 and supplying the subscriber code to the second network interface 61. Thereto, the wireless receiver 31 is coupled to the first network interface 35 via a processor 34. The processor 34 for example comprises a detector for detecting the address code and/or the subscriber code and in response controlling the first network interface 35 such that it contacts the second network interface 61 in response to the address code and then supplies the subscriber code to the second network interface. The processor 34 may further for example comprise a converter for converting a format of the address code into a further format in case the first network interface cannot handle the format but can only handle the further format.

The first intermediate device 3 may further comprise a power transmitter 32 for transmitting the power to an area in which the source device is located. The first intermediate device 3 may further comprise a first generator 33 coupled to the wireless receiver 31 and the processor 34 for generating a device code that together with the subscriber code is to be supplied via the first network interface 35 to the second network interface 61. Especially in case of the system 1 comprising further first intermediate devices 4 and/or 5 each comprising a further wireless receiver and a further first network interface and a further first generator for generating a further device code different from the device code, the device code may be used in the second intermediate device 6 to generate location information that is to be supplied to the destination device 7. Such location information defines an absolute location or a relative location of the source device 2 or defines an absolute location or a relative location of the first intermediate device 3. Alternatively, the processor 34 may comprise the first generator 33. The processor 34 may further activate/deactivate the power transmitter 32. Alternatively, the first generator 33 may further comprise the converter and/or may be located between the processor 34 and the first network interface 35.

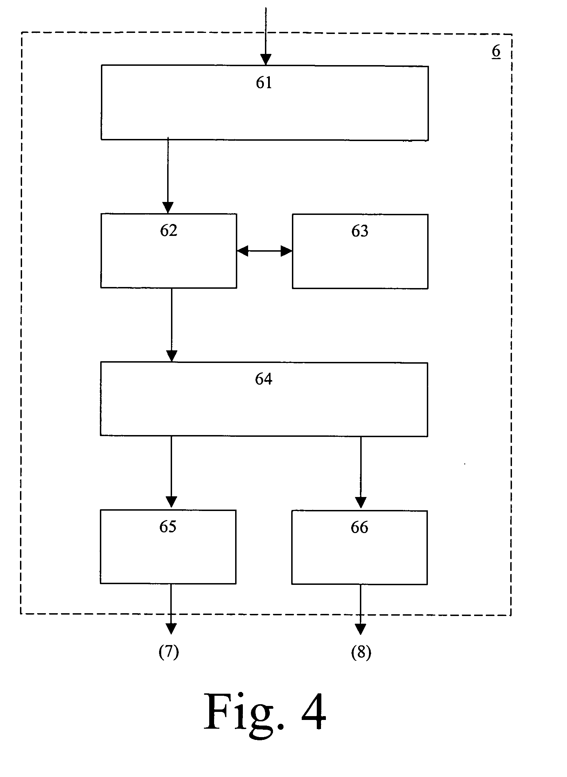

The second intermediate device 6 according to the invention shown in Fig. 4 in greater detail comprises the second network interface 61 for receiving the subscriber code and comprises a third network interface 65 for in response to the subscriber code contacting a fourth network interface of the destination device 7. Thereto, the second network interface 61 is coupled to the third network interface 65 via a processor 62. The processor 62 for example comprises a detector for detecting the subscriber code and in response controlling the third network interface 65 such that it contacts the fourth network interface of the destination device 7. Thereto, the processor 62 for example comprises a translator for translating the subscriber code into an address code defining the (fourth network interface of the) destination device 7 and may further for example comprise a converter for converting a format of the address code into a further format in case the third network interface 65 cannot handle the format but can only handle the further format.

Preferably, the second intermediate device 6 further comprises a second generator 63 for in response to the device code generating the location information for example defining a location of the source device 2 and/or of the first intermediate device 3 which location information is to be supplied via the third network interface 65 to the (fourth network interface of the) destination device 7. Alternatively, the second generator 63 may further comprise the translator and/or the converter and/or may form part of the processor 62. The second intermediate device 6 may further comprise a fifth network interface 66 for in response to the subscriber code contacting a sixth network interface of a further destination device 8. The third and fifth network interfaces 65 and 66 are coupled to the processor 62 directly (not shown) or indirectly (as shown) via a switch 64 or another coupling unit. The translator may translate the subscriber code into one or more address codes that define that the (fourth network interface of the) destination device 7 and the (sixth network interface of the) further destination device 8 are to be contacted. According to a first option, the subscriber code comprises a first part that is translated into an address code defining the fourth network interface and comprises a second part that is translated into an address code defining the sixth network interface. According to a second option, the subscriber code comprises only one part that is translated into an address code defining the fourth network interface and into an address code defining the sixth network interface.

So, in a minimum situation, the subscriber code comprises an identification such as a subscriber identification. In a first more extended situation, the subscriber code comprises an identification together with information defining one or more address codes. In a second more extended situation, the subscriber code comprises a (subscriber) identification together with script information defining how to handle the one or more address codes that are to be derived from the (subscriber) identification (such as for example "contact the nearest address code(s) first" or "contact a first address code during the day and contact a second address code during the evening" etc.). In a maximum situation, the subscriber code comprises a (subscriber) identification together with information defining one or more address codes together with script information defining how to handle these one or more address codes.

The first and second network interfaces 35,61 may be telephone interfaces such that a telephone call can be set up or a SMS message can be exchanged between these first and second network interfaces 35,61. The third network interface 65 may be a non-telephone interface such as a computer interface or a modem such that for example an email message can be exchanged between the second intermediate device 6 and the destination device 7.

The first and second and third network interfaces 35,61,65 may be telephone interfaces such that a telephone call can be set up or a SMS message can be exchanged between the first intermediate device 3 and the destination device 7.

Preferably, the system 1 further comprises a subscription unit for charging a subscriber per subscriber code for paying the costs made by one or more of the network interfaces 35,61,65. Such a subscription unit may be coupled to or may form part of one or more of the processors 34 and 62.

The system 1 according to the invention functions as follows. A child that has lost its parents and that is wearing an article of clothing comprising the source device 2 walks to or is brought to the first intermediate device 3 that for example forms part of an object that is well recognizable. The information stored in the source device 2 is transmitted wirelessly to the first intermediate device 3. This information comprises the address code and the subscriber code. In response to the address code, the first intermediate device 3 contacts the second intermediate device 6 such as an exchange and supplies the subscriber code to this second intermediate device 6. At the second intermediate device 6, the subscriber code is converted into a further address code defining the destination device 7, and as a result an email is sent to the destination device 7 in the form of a pc indicating that the child is looking for its parents and comprising location information about the location of the particular first intermediate device 3 and/or a SMS message is sent to the destination device 7 in the form of a mobile phone indicating that the child is looking for its parents and comprising location information about the location of the particular first intermediate device 3 and/or a call is set up with the destination device 7 in the form of a mobile or fixed phone to allow the child to speak with its parents via the first network interface 35 thereto comprising a man-machine-interface etc.

The source device 2 may be activated by hand or not and may be activated by incoming power or not and may be fed by a battery or not and may be fed with the incoming power or not. More than one destination device may be contacted, simultaneously or subsequently, to increase an overall reachability.

The destination device may be a further first intermediate device in combination with a further source device. In that case, via the source device and the first intermediate device, the second intermediate device defined by the address code is contacted and a first subscriber code is supplied to this second intermediate device. And, via the further source device and the further first intermediate device, the second intermediate device defined by the address code is contacted and a second subscriber code is supplied to this second intermediate device. The second intermediate device links the first and second subscriber code (owing to the fact that these codes are identical to each other or owing to the fact that these codes are linked to each other in a memory) and in response a message can be exchanged and/or a call can be set up between the first intermediate device and the further intermediate device.

In each device shown, each block may be hardware, software or a mixture of both. The computer program product according to the invention may be stored on and/or comprise a fixed medium or a removable medium not shown.

The above-mentioned embodiments illustrate the invention and do not limit the invention. A person skilled in the art will be able to design alternative embodiments without departing from the scope of the claims. In the claims, one or more reference signs placed between brackets are not be construed as limiting the claim. Use of "to comprise" and its conjugations does not exclude the presence of elements or steps other than those stated in a claim. The article "a" or "an" preceding an element or a step does not exclude the presence of a plurality of such elements or steps.

So, the invention is about a call setup via a token access to an intelligent batch of call alternatives. A token such as a wristband with a number, a barcode, a RFID, etc. is associated with a (list of) telephone number(s) of reference persons. Using this token, a contact can be made such as a "walkie-talkie" alike conversation with (one of) the reference person(s) by means of for example any kind of phone having a token reader. The information with respect to the reference persons in the calling list (telephone numbers) may be kept by the token or remote in a network server in the telecommunications network.

The context of the caller/callee or information on (or associated with) the token can be used by an algorithm to iterate the list of reference persons. The list of referenced persons is for example end-user defined and/or offered in the context of a service and/or defined via the application of an algorithm and/or a mix of the above.

Case I: Beach poles. Parents are offered a service that maps their mobile phone number(s) to a unique identifier (token) contained in an RFID-enabled wristband. A third party (e.g. Beach Rescue Service/Red Cross) can perform the mapping by sending an SMS, containing the token, to a special number, or by using an RFID enabled GSM. Should a child want to get into contact with a parent (either in case of emergency or for an informal conversation for an ice-cream), it needs to go to one of the poles present on the beach. By simply touching a designated area on the pole, a call is immediately set up.

Possible variations are that the pole might contain distinct touching areas for 'mother', 'father' and 'emergency', by simply touching one of the surfaces, a call is immediately set up to the respective person; the token might be an RFID, a bar-code, a printed number; the token might contain the data or the token is associated with the data (stored in a network element); the data in the RFID can be a (combination of) one or more telephone number(s), an iteration algorithm, an implementation itself; the selection of the call destination can be selected from a list that appears on a screen on the pole, a list of call destinations may be iterated automatically, if a list is exhausted, a nearby third party (e.g. Beach Rescue Service/Red Cross) is called, location data of reference persons may be taken into account when iterating the list. In this case, the pole may be any kind of telephone having a token reader.

Case II: No mobile phones. This is a major variation of case I in which both the parents and the children get (a wristband with) a token. In this case neither the children nor the parents need to have a mobile phone. If a child gets lost, both the parents and the child go to the nearest pole. If they are lucky, they picked the same pole. If not, an automatic conversation is set up between them. Advantages are that no third party is required, that this facilitates informal communication between peers, and that the emergency scenario is embedded into the normal scenario of an informal communication which guarantees that the child will have the proper reflex in case of an emergency (trained by the previous informal conversations when asking an ice-cream). Thus, the pole acts as a mama-proxy.

Case III: SMS service. In the absence of beach poles, any person can help the child get into contact with the primary destination by sending an SMS containing the unique identifier to a specific service. A call is then set up between the originating phone and the primary destination. Abstract away the list of telephone numbers has the advantages of simplicity, privacy and the possibility to have a fallback scenario in case the list of reference persons is exhausted (similar as in case I).

Case IV: Token, reference persons not stored in the network. A unique identifier, reference persons and their roles (opt. inclusive algorithm) are stored in a programmable wristband (contains e.g. programmable RDFID). The program is loaded and initiated by a third party (e.g. Beach Rescue Service/Red Cross) or by one of the referenced persons e.g. mum or dad by using an NFC/RFID enabled GSM. At the GSM enabled beach poles the Case II comes active.

Case V: Intelligent badge, similar to the case IV. The contact list is stored in a badge (business context). The beach pole is now a telephone set at a desk in e.g. a meeting room or a kind any kind of touch communication zone in the meeting room (business pole, sensitive zones in a meeting room). A contact list (buddy list) is updated with presence information every time the badge is used to setup a communication session. The benefit for a company is that specific numbers like e.g. emergency numbers or the number of the receptionist can be programmed in advance in the badge. Even call forwarding procedures can be stored in the badge (algorithm in a badge instruments the network to do a rerouting of an incoming call).

Further cases are not to be excluded.

## Claims

1. A system (1) for contacting a destination device (7) via first and second intermediate devices (3,6) in response to information from a source device (2), **characterized in that** the system (1) comprises
- the source device (2) comprising a memory (21) for storing the information and comprising a wireless transmitter (22) for transmitting the information, which information comprises an address code and a subscriber code,
- the first intermediate device (3) comprising a wireless receiver (31) for receiving the address code and the subscriber code and comprising a first network interface (35) for in response to the address code contacting a second network interface (61) and supplying the subscriber code to the second network interface (61), and
- the second intermediate device (6) comprising the second network interface (61) for receiving the subscriber code and comprising a third network interface (65) for in response to the subscriber code contacting a fourth network interface of the destination device (7).

2. The system (1) as defined in claim 1, **characterized in that** the first intermediate device (3) comprises a first generator (33) for generating a device code that together with the subscriber code is to be supplied to the second network interface (61) and **in that** the system (1) comprises a further first intermediate device (4) comprising a further wireless receiver and a further first network interface and a further first generator for generating a further device code different from the device code and **in that** the second intermediate device (6) comprises a second generator (63) for in response to the device code generating location information that is to be supplied via the third network interface (65) to the fourth network interface.

3. The system (1) as defined in claim 1 or 2, **characterized in that** the source device (2) is a battery-less device comprising a power receiver (23) for receiving power for feeding the wireless transmitter (22) and **in that** the first intermediate device (3) comprises a power transmitter (32) for transmitting the power.

4. The system (1) as defined in claim 1, 2 or 3, **characterized in that** the second intermediate device (6) comprises a fifth network interface (66) for in response to the subscriber code contacting a sixth network interface of a further destination device (8).

5. The system (1) as defined in claim 1, 2, 3 or 4, **characterized in that** the first and second network interfaces (35,61) are telephone interfaces and **in that** the third network interface (65) is a non-telephone interface.

6. The system (1) as defined in claim 1, 2, 3 or 4, **characterized in that** the first and second and third network interfaces (35,61,65) are telephone interfaces.

7. The system (1) as defined in claim 6, **characterized in that** a call is set up between the first network interface (35) and the fourth network interface.

8. The system (1) as defined in claim 1, 2, 3, 4, 5, 6 or 7, **characterized in that** the system (1) comprises a subscription unit for charging a subscriber per subscriber code for paying the costs made by one or more of the network interfaces (35,61,65).

9. A source device (2) comprising a memory (21) for storing an address code and a subscriber code and comprising a wireless transmitter (22) for transmitting the address code and the subscriber code for use in a system (1) as defined in any one of the claims 1-8.

10. A first intermediate device (3) comprising a wireless receiver (31) for receiving an address code and a subscriber code and comprising a first network interface (35) for in response to the address code contacting a second network interface (61) and supplying the subscriber identification code to the second network interface (61) for use in a system (1) as defined in any one of the claims 1-8.

11. A second intermediate device (6) comprising a second network interface (61) for receiving a subscriber code and comprising a third network interface (65) for in response to the subscriber identification code contacting a fourth network interface for use in a system (1) as defined in any one of the claims 1-8.

12. A method for contacting a destination device (7) via first and second intermediate devices (3,6) in response to information from a source device (2), **characterized in that** the method comprises the steps of
- at the source device (2) comprising a memory (21) for storing the information and comprising a wireless transmitter (22), transmitting the information, which information comprises an address code and a subscriber code,
- at the first intermediate device (3) comprising a wireless receiver (31) and a first network interface (35), receiving the address code and the subscriber code and in response to the address code contacting a second network interface (61) and supplying the subscriber code to the second network interface (61), and
- at the second intermediate device (6) comprising the second network interface (61) and a third network interface (65), receiving the subscriber code and in response to the subscriber identification code contacting a fourth network interface of the destination device (7).

13. Computer program product for performing the steps of the method as defined in the claim 12.

14. Medium comprising the computer program product as defined in the claim 13.
